# EUROPÄISCHE PATENTSCHRIFT

(11) **EP 0 765 598 B1**
(45) Veröffentlichungstag und Bekanntmachung des Hinweises auf die Patenterteilung: **10.01.2001**
(21) Anmeldenummer: 96112709.9
(22) Anmeldetag: 07.08.1996
(51) Int. Cl.: A01F 25/20

(54) **Trennvorrichtung an Geräten zur Entnahme von Silage aus Flachsilos**
Separating apparatus for silage loaders in trench silos
Dispositif de séparation pour désileuses de silos couloirs

(30) Priorität: 28.03.1996 DE 19612363; 22.09.1995 DE 29515146 U
(43) Veröffentlichungstag der Anmeldung: 02.04.1997
(73) Patentinhaber: B. Strautmann & Söhne GmbH & Co., D-49196 Bad Laer (DE)
(72) Erfinder: Bevermann, Wilhelm, 49196 Bad Laer (DE)
(74) Vertreter: Stracke, Alexander, Dipl.-Ing.

(56) Entgegenhaltungen:
- EP-A- 0 090 906
- EP-A- 0 338 653
- DE-A- 3 536 141

## Beschreibung

Die vorliegende Erfindung betrifft eine Trennvorrichtung für Geräte zur Entnahme von Silage aus Flachsilos, deren Unterseite einen geradlinigen, L- oder U-förmigen Verlauf aufweist und die an dieser Unterseite mit Schneiden versehen ist und insgesamt an Schwingen oder vertikalen Führungen auf- und abwärts beweglich angeordnet ist.

Trennvorrichtungen der gattungsgemäßen Art sind an selbstfahrenden, an gezogenen oder an Schleppern angebauten Geräten zur Futterentnahme, zur Futterverteilung und Futtervermischung in verschiedenen Ausführungsformen bekannt. Sie dienen zum Abtrennen von Silagefutter und auch teilweise zum Einschieben des abgetrennten Futters in die Laderäume der entsprechenden Geräte bzw. Fahrzeuge.

Eine einfache Ausführung ist unter der Bezeichnung Silokamm bekannt, hierbei sind an der Unterseite der Trennvorrichtung, und zwar über die gesamte Schildbreite, kammförmige Zinken aufgesetzt, mit denen Futter vom Flachsilo abgekratzt und in den zugehörigen Laderaum geschoben wird. Derartige Trennvorrichtungen arbeiten unsauber, am Flachsilo selbst wird eine aufgerauhte Oberfläche erzeugt und das Einschieben des Futters in den Laderaum ist im unteren Bereich der Zinken unsauber. Nachgärung und Futterverluste sind hierbei erheblich.

Weit verbreitet sind Trennvorrichtungen mit waagerecht oszillierenden Schneidmessern an den Unterkanten, im allgemeinen sind hierbei die Unterkanten U-förmig, seitlich in Richtung des Laderaumes abgewinkelt und ebenfalls mit oszillierenden Messern besetzt. Diese als Schneidschilder bekannten Trennvorrichtungen erzeugen am Flachsilo glatte, nachgärungsarme Schnittflächen und führen das Futter verlustärmer in den Laderaum ein. Der erhebliche Nachteil ist jedoch, daß durch die Anzahl hoch beanspruchter, beweglicher Antriebsteile eine laufende, sorgfältige Wartung erforderlich ist, um den Verschleiß und die Reparaturanfälligkeit herabzusetzen. Ferner führen die Antriebsteile und die Messerführungen zu einem teuren Schneidschild.

Solch eine vorrichtung ist durch die EP-A-0 338 653 bekannt.

Der vorliegenden Erfindung liegt die Aufgabe zugrunde, eine Trennvorrichtung der gattungsgemäßen Art zu schaffen, die am Flachsilo einen sauberen Schnitt erzeugt und sich dabei durch einen einfachen Aufbau auszeichnet, so daß die Kosten für Herstellung und Wartung insgesamt gering sind.

Diese Aufgabe wird erfindungsgemäß dadurch gelöst, daß die Trennvorrichtung über mindestens einen Vibrator ausschließlich durch dessen Unwucht schwingend bzw. oszillierend antreibbar ist.

Eine derartige Trennvorrichtung ist aufgrund des gerätetechnisch vergleichsweise einfach herstellbaren Antriebes in Form eines Vibrators kostengünstig herzustellen, bedarf vergleichsweise nur selten einer Wartung und sorgt darüber hinaus für einen sauberen, nachgärungsarmen Schnitt im Flachsilo.

Ausführungsbeispiele der Erfindung sind in den Zeichnungen dargestellt und werden nachfolgend näher beschrieben. Es zeigen:
- Figur 1: eine Seitenansicht eines verfahrbaren Futterverteilgerätes, bei dem am hinteren Ende eine Trennvorrichtung angeordnet ist,
- Figur 2: eine Rückansicht der Trennvorrichtung,
- Figur 3: eine Draufsicht auf die Trennvorrichtung,
- Figur 4: eine der Figur 2 entsprechende Rückansicht einer Trennvorrichtung nach einem weiteren Ausführungsbeispiel der Erfindung,
- Figur 5: einen schematisch dargestellten Schnitt nach der Linie V-V in Figur 4,
- Figur 6: eine schematisch dargestellte Ansicht in Richtung des Pfeiles VI in Figur 4,
- Figur 7: einen schematisch dargestellten Teilschnitt nach der Linie VII-VII in Figur 4,
- Figur 8: eine der Figur 5 entsprechende Teilansicht des unteren Bereiches der in Figur 5 schon gezeigten Trennvorrichtung bei verstellter Position von Seitenschneiden,
- Figuren 9-12: schematische Darstellungen verschiedener Vibratoren zum Antrieb einer erfindungsgemäßen Trennvorrichtung.

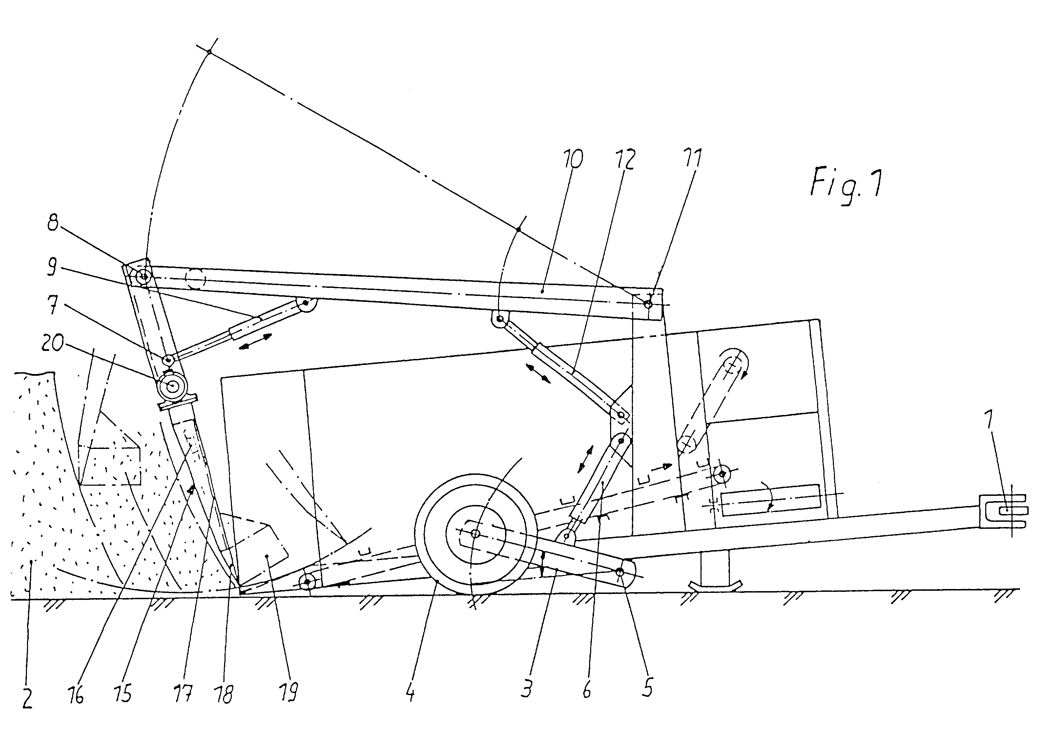

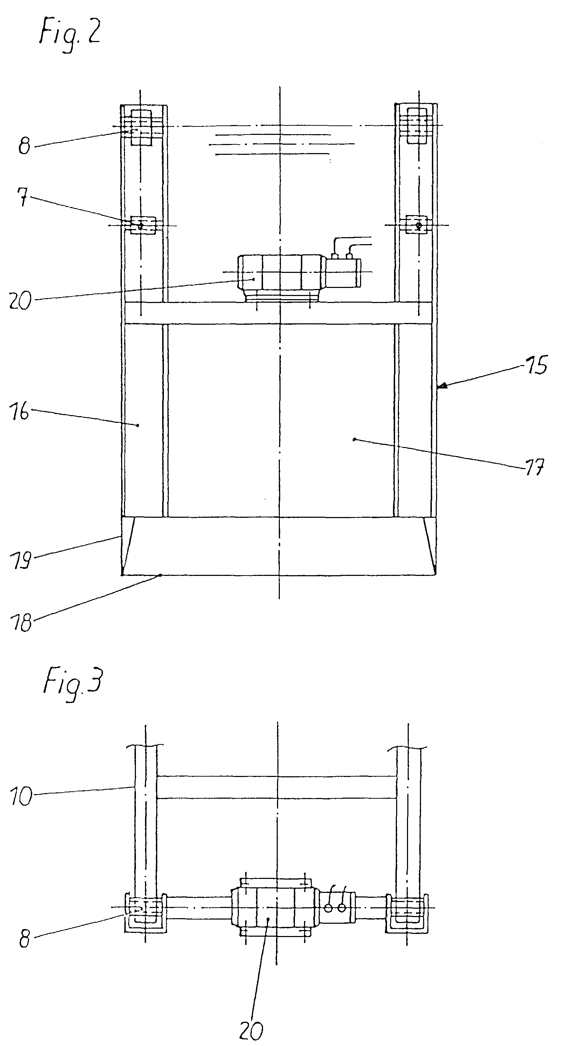

Das in den Figuren 1 - 3 beispielhaft dargestellte Gerät zur Entnahme und zum Verteilen von Silagefutter wird vorzugsweise hinter einem nicht dargestellten landwirtschaftlichen Schlepper an dessen Ackerschiene 1 angehängt. Zur Aufnahme von Silagefutter wird das Gerät rückwärts an einen Flachsilo 2 herangefahren, wobei es durch Verschwenken von an den Achsschwingen 3 gelagerten Laufrädern 4 um eine Drehachse 5 mittels der Hydrozylinder 6 in die abgesenkte Arbeitsstellung gebracht wird.

Eine Trennvorrichtung 15 ist über Aufnahmepunkte 8 über einen Hydrozylinder 9 schwenkbar an einer Schwinge 10 des Gerätes angeordnet. Die Trennvorrichtung besteht im wesentlichen aus einem Schnittrahmen 16, einer Schildplatte 17, einer unteren Querschneide 18, Seitenschneiden 19 und einem angeflanschten, im dargestellten Ausführungsbeispiel hydraulisch angetriebenen Vibrator 20. Die glatten oder profilierten Schneidkanten der Querschneide 18 und der Seitenschneiden 19 können direkt oder über anschraubbare Leisten an der Trennvorrichtung 15 angebracht sein.

Mittels der Schwinge 10, die um einen Drehpunkt 11 schwenkend von einem Hydrozylinder 12 aufwärts bewegt wird, wird die Trennvorrichtung 15 mit ihrer an der Unterkante starr befestigten Querschneide 18 bis über die Höhe des FLachsilos 2 gehoben und bis zu einer Schnittbreite, die maximal der Länge der Seitenschneiden 19 entspricht, über den Flachsilo 2 geschwenkt.

Mit eingeschaltetem Vibrator 20 erfolgt nun unter Hubeinzug des Hydrozylidners 12 die Absenkung der Trennvorrichtung 15 in den Flachsilo 2, wobei durch die hohen Frequenzen der Querschneide 18 und der Seitenschneiden 19 Silage sehr sauber und mit relativ hoher Absenkgeschwindigkeit abgetrennt wird.

Um die Vibrationen auf die Trennvorrichtung zu beschränken, sind zwischen dieser und dem Gerät an der Befestigung der Schwinge 10, vorzugsweise im Bereich der schwenkbaren Aufnahmepunkte 8 und an den Aufnahmepunkten 7 der Hydrozylinder 9, dämpfende Elemente, wie Gummifedern, Gummipuffer oder -buchsen etc., vorzugsweise in der Ausführung als Gummimetallemente angebracht.

Der Vibrator 20 ist so ausgelegt, daß durch gegenläufige Erregung der Massenkräfte die Schwingungsrichtung bestimmt werden kann, sie wird zweckmäßigerweise auf die Querschneide 18 ausgerichtet. Die Anzahl der Vibratoren kann im Bedarfsfalle erhöht werden. Der Antrieb erfolgt vorzugsweise hydraulisch, kann aber auch elektrisch oder durch Druckluft erfolgen.

Die Erregung der Schwingungen kann selbstverständlich auch durch mehrere Vibratoren, die gleichsinnig oder entgegengesetzt rotieren, erfolgen. Die Anordnung der Vibratoren kann linear oder winklig zueinander versetzt sein.

Die schwingungsdämpfenden Elemente, vorzugsweise aus Gummi-Metall, können bei Bedarf auch durch Stahlfedern oder Druckspeicher ersetzt werden.

Die Trennvorrichtung 15, die gemäß Ausführungsbeispiel nach den Figuren 1 - 3 in Form eines an den Schwingen 10 dargestellten Trennschildes gezeigt ist, kann u. a. auch als U-förmiger, vertikal verstellbarer Schneidrahmen ausgebildet sein.

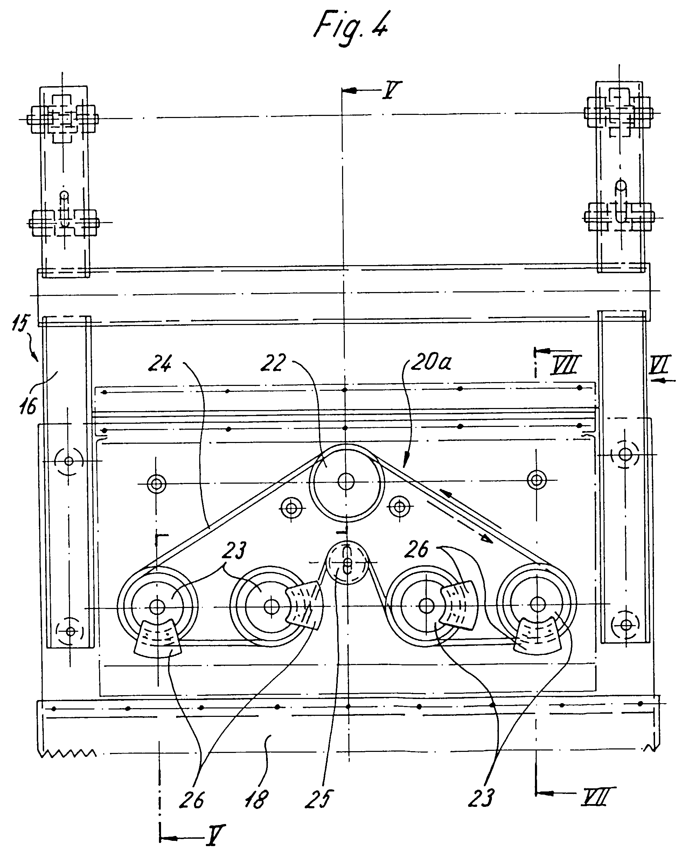

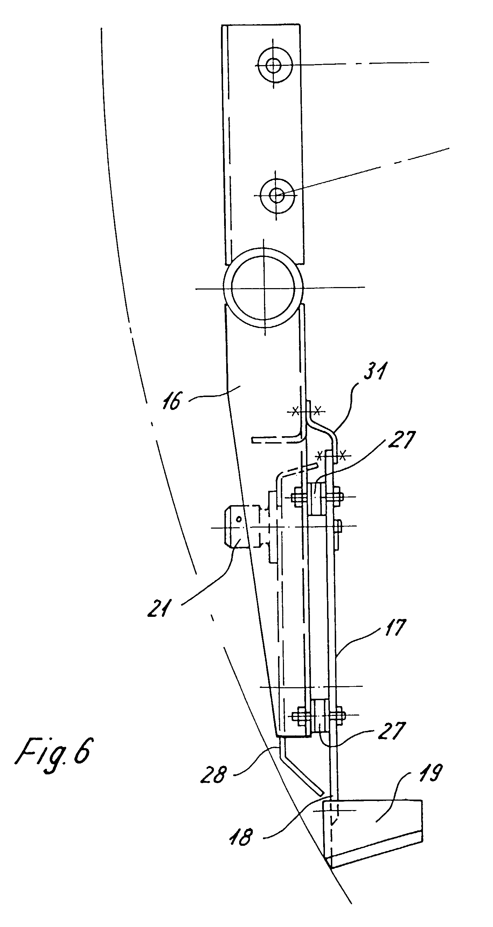

Die in den Figuren 4 - 7 gezeigte Trennvorrichtung 15 ist mit einem Vibrator 20a ausgestattet, der aus einer über einen Motor 21 antreibbaren Antriebsscheibe 22 sowie mehreren Unwuchtscheiben 23 besteht. Die Unwuchtscheiben 23 werden über einen Antriebsriemen 24 durch das vom Motor 21 angetriebene Antriebsrad 22 in Rotation versetzt.

Im Ausführungsbeispiel nach den Figuren 4 - 7 sind insgesamt vier Unwuchtscheiben 23 vorgesehen, die insgesamt auf einer parallel zur Querscheibe 18 verlaufenden Ebene angeordnet sind. Je zwei dieser Unwuchtscheiben 23 bilden ein gleichsinnig angetriebenes Paar, wobei die Umkehr der Drehrichtung der beiden Paare erreicht wird durch eine Umlenkrolle 25, über die der Riemen 24 geführt ist.

Die Unwuchtscheiben 23 sind jeweils mit Gewichten 26 versehen, um die erwünschte Unwucht zu erzeugen. Diese Gewichte 26 sind beim Ausführungsbeispiel der Erfindung nach den Figuren 4 - 7 so angeordnet, daß diese an den äußeren Unwuchtscheiben 23 parallel zueinander angeordnet sind, desgleichen sind die Gewichte 26 der beiden innenliegenden Unwuchtscheiben 23 gleichsinnig angeordnet, aber gegenüber den Gewichten 26 der äußeren Unwuchtscheiben 23 um 90° versetzt. Durch die Anordnung der Gewichte 26 auf den Unwuchtscheiben 23 kann weitestgehend Einfluß genommen werden auf die Frequenz der über den Vibrator 20a angetriebenen Trennvorrichtung.

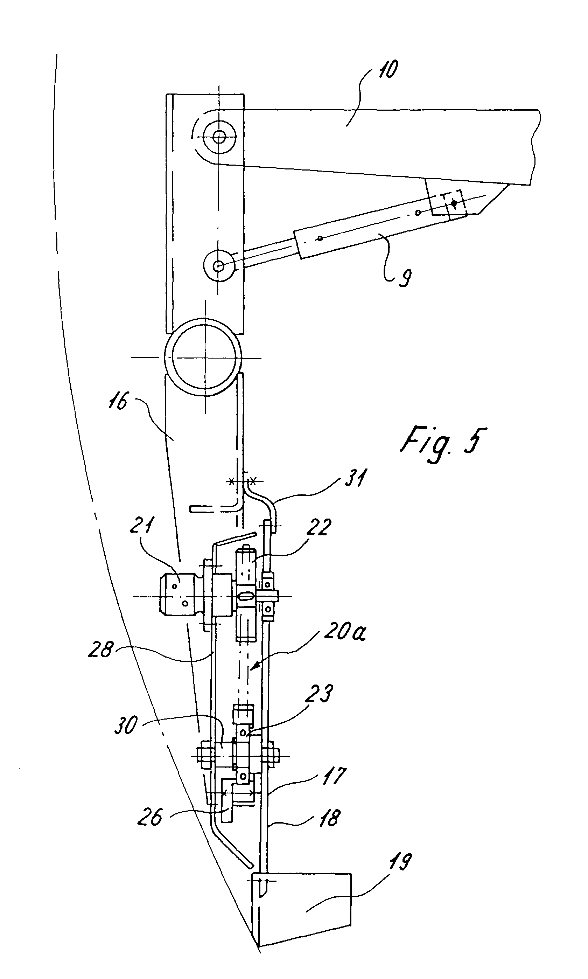

Der gesamte Vibrator 20a ist auf der Schildplatte 17 montiert, die über Schwingelemente 27 am Schildrahmen 16 befestigt ist. Die Lagerung der Unwuchtscheiben 23 sowie der Antriebsscheibe 22 und des Antriebsmotors 21 erfolgt über Zapfen 30, die einerseits an der Schildplatte 17 befestigt sind und andererseits eine Zusatzplatte 28 tragen, durch welche gleichzeitig der gesamte Vibrator 20a abgedeckt wird. Dies geht beispielsweise aus Figur 5 sehr anschaulich hervor.

Die durch den Vibrator 20a erzeugten Schwingungen werden somit weitestgehend vom Schildrahmen 16 ferngehalten.

Eine Spaltüberdeckung 31 aus Gummi oder einem ähnlichen Material verbindet die Schildplatte 17 mit dem Schildrahmen 16 und verhindert das Eindringen von Schmutz in den Bereich des Vibrators 20a.

Wie aus den Zeichnungen deutlich hervorgeht, verlaufen die Achsen der Unwuchtscheiben 23 und die Achse des Antriebsrades 22 lotrecht zur Schildplatte 17, so daß sich insgesamt ein platzsparender Aufbau des Vibrators 20a auf der Schildplatte 17 ergibt.

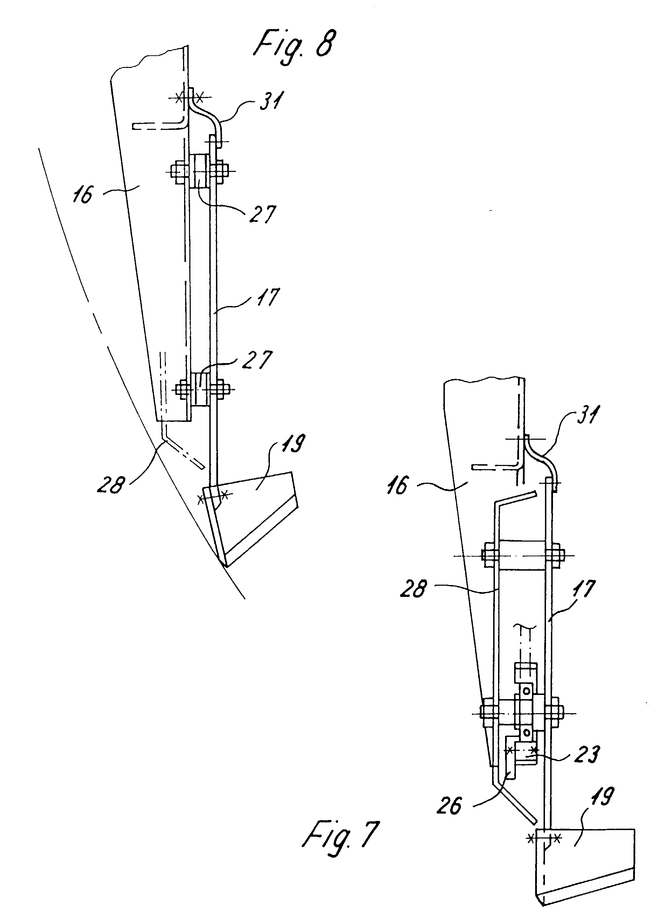

Das Ausführungsbeispiel gemäß Figur 8 unterscheidet sich von dem Ausführungsbeispiel nach den Figuren 4 - 7 dadurch, daß die Querschneide 18 gegenüber dem Verlauf der Schildplatte 17 im übrigen zur Erzielung eines besseren Schnittwinkels nach hinten abgewinkelt ist, das gleiche gilt entsprechend für die Seitenschneiden 19.

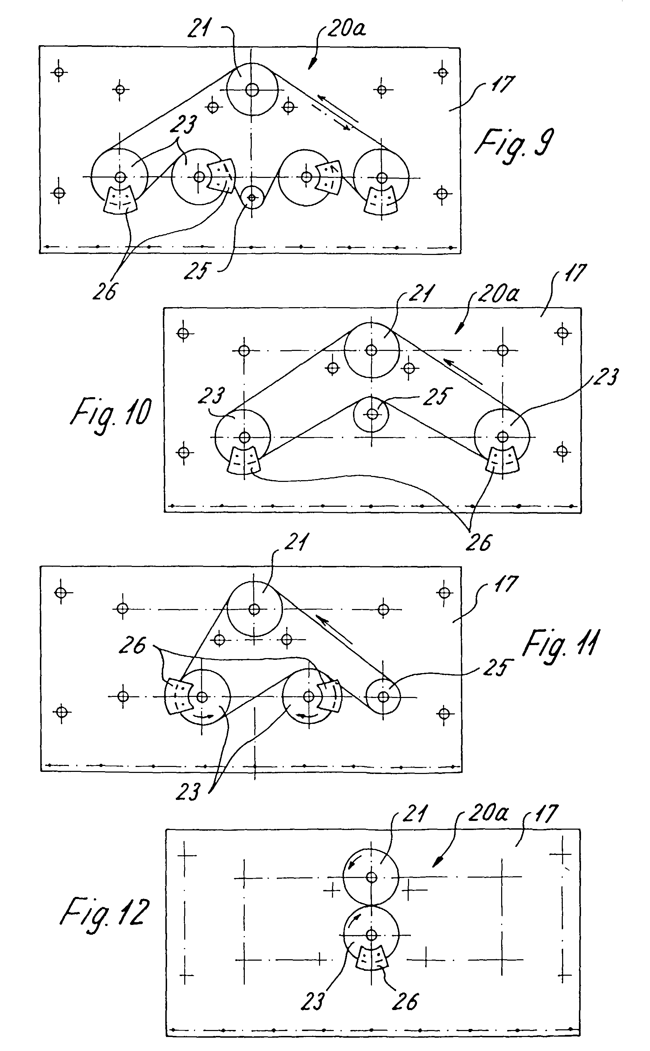

In den Figuren 9 - 12 sind in stark schematisierten Darstellungen verschiedene Anordnungen von Vibratoren 20a gezeigt.

Dabei entspricht der Aufbau des Vibrators 20a in Figur 9 im wesentlichen dem Aufbau des Vibrators 20a nach dem Ausführungsbeispiel nach den Figuren 4 - 7 mit dem Unterschied, daß hier die Umlenkrolle 25 unterhalb der Achsebene der Unwuchtscheiben 23 liegt und daß darüber hinaus der Riemen 24 von Unwuchtscheibe 23 zu Unwuchtscheibe 23 wechselseitig verläuft, so daß die Drehrichtungen jeweils zweier benachbarter Unwuchtscheiben 23 umgekehrt werden.

Der Vibrator 20a gemäß Figur 10 weist lediglich zwei Unwuchtscheiben 23 auf, die im gleichen Abstand zum Antriebsrad 21 angeordnet sind und deren Drehrichtungen durch eine Umlenkrolle 25 gegensinnig gewählt sind. Die Gewichte 26 auf den beiden Unwuchtscheiben 23 liegen wieder parallel zueinander.

Auch beim Ausführungsbeispiel gemäß Figur 11 sind lediglich zwei Unwuchtscheiben 23 vorgesehen, die Drehrichtung dieser beiden Unwuchtscheiben 23 ist gegensinnig, wobei hier die Unlenkrolle 25 außerhalb der beiden Unwuchtscheiben 23 angeordnet ist.

Einen vergleichsweise einfach aufgebauten Vibrator 20a zeigt das Ausführungsbeispiel nach Figur 12, hier wirkt das Antriebsrad 21 unmittelbar mit einer Unwuchtscheibe 23 mit einem Gewicht 26 zusammen.

Die Figuren 9 - 12 sollen deutlich machen, daß hinsichtlich der Gestaltung eines entsprechend aufgebauten Vibrators 20a vielerlei Möglichkeiten bestehen, um die Schildplatte 17 und damit auch die an dieser Schildplatte 17 festgelegten Schneiden in Schwingungen zu versetzen.

## Patentansprüche

1. Trennvorrichtung für Geräte zur Entnahme von Silage aus Flachsilos, deren Unterseite einen geradlinigen, L- oder U-förmigen Verlauf aufweist und die an dieser Unterseite mit Schneiden (18) versehen ist und insgesamt an Schwingen oder vertikalen Führungen auf- und abwärts beweglich angeordnet ist, **dadurch gekennzeichnet, daß** die Trennvorrichtung (15) über mindestens einen Vibrator (20, 20a) ausschließlich durch dessen Unwucht schwingend bzw. oszillierend antreibbar ist.

2. Trennvorrichtung nach Anspruch 1, **dadurch gekennzeichnet, daß** die Trennvorrichtung (15) an elastischen Aufnahmepunkten (7, 8) mit dem Gerät verbunden ist.

3. Trennvorrichtung nach Anspruch 1 oder 2, **dadurch gekennzeichnet, daß** die durch den Vibrator (20) erzeugten Schwingungen in Richtung auf die Querschneide (18) ausgerichtet sind.

4. Trennvorrichtung nach den Ansprüchen 1 - 3, **dadurch gekennzeichnet, daß** der Vibrator (20) direkt durch einen Druckmittelmotor angetrieben ist.

5. Trennvorrichtung nach den Ansprüchen 1 - 4, **dadurch gekennzeichnet, daß** der Vibrator (20) über mechanische Antriebsmittel angetrieben ist.

6. Trennvorrichtung nach den Ansprüchen 1 - 5, **dadurch gekennzeichnet, daß** elastische Aufnahmepunkte (7, 8) für die Trennvorrichtung (15) aus Gummi- oder Kautschukpuffern oder -buchsen bestehen.

7. Trennvorrichtung nach den Ansprüchen 1 - 4, **dadurch gekennzeichnet, daß** die Aufnahmepunkte (7, 8) aus Gummi-Metallverbindungen gebildet sind.

8. Trennvorrichtung nach den Ansprüchen 1 - 7, **dadurch gekennzeichnet, daß** der Vibrator elektrisch betrieben wird.

9. Trennvorrichtung nach den Ansprüchen 1 - 8, **dadurch gekennzeichnet, daß** mehrere Vibratoren (20) gleichsinnig drehend vorgesehen sind.

10. Trennvorrichtung nach den Ansprüchen 1 - 8, **dadurch gekennzeichnet, daß** mehrere Vibratoren (20) entgegengesetzt drehend vorgesehen sind.

11. Trennvorrichtung nach den Ansprüchen 1 - 10, **dadurch gekennzeichnet, daß** die Vibratoren (20) in einem beliebigen Winkel zueinander angeordnet sind.

12. Trennvorrichtung nach einem oder mehreren der vorhergehenden Ansprüche, **dadurch gekennzeichnet, daß** der Vibrator (20a) aus einem Antriebsrad (22) und mindestens einer hiervon angetriebenen Unwuchtscheibe (23) mit einem die Unwucht erzeugenden Gewicht (26) besteht.

13. Trennvorrichtung nach Anspruch 12, **dadurch gekennzeichnet, daß** bei der Anordnung mehrerer Unwuchtscheiben (23) mit Gewichten (26) diese Unwuchtscheiben über einen gemeinsamen Riemen (24) vom Antriebsrad (22) angetrieben sind.

14. Trennvorrichtung nach Anspruch 13, **dadurch gekennzeichnet, daß** die Drehrichtung aller Unwuchtscheiben (23) gleich ist.

15. Trennvorrichtung nach Anspruch 13, **dadurch gekennzeichnet, daß** die Drehrichtung der Unwuchtscheiben 23 durch den Einsatz einer oder mehrerer Umlenkrollen (25) unterschiedlich ist.

16. Trennvorrichtung nach einem oder mehreren der Ansprüche 12 - 15, **dadurch gekennzeichnet, daß** die die Unwucht erzeugenden Gewichte (26) der Unwuchtscheiben (23) gleichsinnig ausgerichtet sind.

17. Trennvorrichtung nach einem der Ansprüche 12 - 15, **dadurch gekennzeichnet, daß** die die Unwucht erzeugenden Gewichte (26) der Unwuchtscheiben (23) auf den einzelnen Unwuchtscheiben (23) unterschiedlich ausgerichtet sind.

18. Trennvorrichtung nach einem oder mehreren der Ansprüche 12 -17, **dadurch gekennzeichnet, daß** das Antriebsrad (22) sowie die Unwuchtscheiben (23) einerseits in der Schildplatte (17) und andererseits in einer parallel hierzu verlaufenden und mit der Schildplatte (17) verbundenen Zusatzplatte (28) gelagert sind.

## Claims

1. Separating device for apparatus for removal of silage from flat silos, the underside of which has a rectilinear L-shaped or U-shaped course and which is provided at this underside with cutting edges (18) and is arranged in its entirety at rockers or vertical guides to be movable upwardly and downwardly, characterised in that the separating device (15) is drivable by way of at least one vibrator (20, 20a) to rock or oscillate exclusively through its weight imbalance.

2. Separating device according to claim 1, characterised in that the separating device (15) is connected with the apparatus at resilient receiving points (7, 8).

3. Separating device according to claim 1 or 2, characterised in that the oscillations produced by the vibrator (20) are oriented in the direction of the transverse cutting edge (18).

4. Separating device according to claims 1 to 3, characterised in that the vibrator (20) is directly driven by a pressure medium motor.

5. Separating device according to claims 1 to 4, characterised in that the vibrator (20) is driven by way of mechanical drive means.

6. Separating device according to claims 1 to 5, characterised in that resilient receiving points (7, 8) for the separating device (15) consist of rubber or caoutchouc buffers or bushes.

7. Separating device according to claims 1 to 4, characterised in that the receiving points (7, 8) consist of rubber-metal connections.

8. Separating device according to claims 1 to 7, characterised in that the vibrator is electrically operated.

9. Separating device according to claims 1 to 8, characterised in that several vibrators (20) are provided to be rotatable in the same sense.

10. Separating device according to claims 1 to 8, characterised in that several vibrators (20) are provided to be rotatable in opposite sense.

11. Separating device according to claims 1 to 10, characterised in that the vibrators (20) are associated with one another at any desired angle.

12. Separating device according to one or more of the preceding claims, characterised in that the vibrator (20a) consists of a drive wheel (22) and at least one weight-imbalance disc (23), which is driven therefrom, with a weight (26) producing the weight imbalance.

13. Separating device according to claim 12, characterised in that in the case of the arrangement of several eccentric-weight discs (23) with weights (26) these eccentric-weight discs are driven by way of a common drive belt (24) from the drive wheel (22).

14. Separating device according to claim 13, characterised in that the rotational direction of all eccentric-weight discs (23) is the same.

15. Separating device according to claim 13, characterised in that the rotational direction of the eccentric-weight discs (23) is different by virtue of use of one or more deflecting rollers (25).

16. Separating device according to one or more of claims 12 to 15, characterised in that the weights (26), which produce the weight imbalance, of the eccentric-weight discs (25) are oriented in the same sense.

17. Separating device according to one or more of claims 12 to 15, characterised in that the weights (26), which produce the weight imbalance, of the eccentric-weight discs (25) are differently oriented on the individual eccentric-weight discs (23).

18. Separating device according to one or more of claims 12 to 17, characterised in that the drive wheel (22) as well as the eccentric-weight discs (23) are mounted on the one hand in the cover plate (17) and on the other hand in an auxiliary plate (28) extending parallel thereto and connected with the cover plate (17).

## Revendications

1. Dispositif de séparation pour appareils d'extraction de fourrage de silos horizontaux, dont le côté inférieur présente un tracé droit, en L ou en U, qui est muni sur ce côté inférieur de lames (18) et qui est disposé en totalité sur des coulisses ou des guides verticaux de manière à pouvoir se déplacer vers le haut et vers le bas, caractérisé en ce que le dispositif de séparation (15) peut être entraîné de manière vibrante ou oscillante par au moins un vibrateur (20, 20a), et exclusivement par le balourd de celui-ci.

2. Dispositif de séparation selon la revendication 1, caractérisé en ce que le dispositif de séparation (15) est relié à l'appareil en des points d'appui élastiques (7, 8).

3. Dispositif de séparation selon la revendication 1 ou la revendication 2, caractérisé en ce que les vibrations produites par le vibrateur (20) sont orientées en direction de la lame transversale (18).

4. Dispositif de séparation selon les revendications 1 à 3, caractérisé en ce que le vibrateur (20) est entraîné directement par un moteur à fluide sous pression.

5. Dispositif de séparation selon les revendications 1 à 4, caractérisé en ce que le vibrateur (20) est entraîné par des moyens d'entraînement mécaniques.

6. Dispositif de séparation selon les revendications 1 à 5, caractérisé en ce que les points d'appui élastiques (7, 8) pour le dispositif de séparation (15) sont constitués par des tampons ou des manchons en gomme ou en caoutchouc.

7. Dispositif de séparation selon les revendications 1 à 4, caractérisé en ce que les points d'appui (7, 8) sont formés par des liaisons métal-caoutchouc.

8. Dispositif de séparation selon les revendications 1 à 7, caractérisé en ce que le vibrateur fonctionne électriquement.

9. Dispositif de séparation selon les revendications 1 à 8, caractérisé en ce que plusieurs vibrateurs (20) tournant dans le même sens sont prévus.

10. Dispositif de séparation selon les revendications 1 à 8, caractérisé en ce que plusieurs vibrateurs (20) tournant en sens inverse sont prévus.

11. Dispositif de séparation selon les revendications 1 à 10, caractérisé en ce que les vibrateurs (20) sont disposés l'un par rapport à l'autre avec un angle quelconque.

12. Dispositif de séparation selon l'une ou plusieurs des revendications précédentes, caractérisé en ce que le vibrateur (20a) comprend une roue d'entraînement (22) et au moins un volant déséquilibré (23) entraîné par celle-ci et muni d'un poids (26) produisant le balourd.

13. Dispositif de séparation selon la revendication 12, caractérisé en ce que, dans le cas où plusieurs volants déséquilibrés (23) munis de poids (26) sont disposés, lesdits volants déséquilibrés sont entraînés par la roue d'entraînement (22) par l'intermédiaire d'une courroie commune (24).

14. Dispositif de séparation selon la revendication 13, caractérisé en ce que le sens de rotation de tous les volants déséquilibrés (23) est identique.

15. Dispositif de séparation selon la revendication 13, caractérisé en ce que le sens de rotation des volants déséquilibrés (23) est différencié par l'emploi d'une ou de plusieurs poulies de renvoi (25).

16. Dispositif de séparation selon l'une ou plusieurs des revendications 12 à 15, caractérisé en ce que les poids (26) produisant le balourd des volants déséquilibrés (23) sont orientés dans le même sens.

17. Dispositif de séparation selon les revendications 12 à 15, caractérisé en ce que les poids (26) produisant le balourd des volants déséquilibrés (23) sont orientés différemment sur les différents volants déséquilibrés (23).

18. Dispositif de séparation selon l'une ou plusieurs des revendications 12 à 17, caractérisé en ce que la roue d'entraînement (22), ainsi que les volants déséquilibrés (23), sont logés dans la plaque écran (17) d'une part, et dans une plaque supplémentaire (28) reliée à ladite plaque écran (17) et s'étendant parallèlement à celle-ci , d'autre part.
